# EUROPEAN PATENT APPLICATION

(11) **EP 4 434 331 A1**
(43) Date of publication of application: **25.09.2024**
(21) Application number: 22895603.3
(22) Date of filing: 15.11.2022
(51) Int. Cl.: A01K 61/13, A01K 63/04

(54) **CEPHALOPOD BREEDING METHOD, PROTOZOA PREVENTION METHOD, PROTOZOA EXTERMINATION METHOD AND CEPHALOPOD LARVA**

(30) Priority: 22.11.2021 JP 2021189456
(71) Applicant: Nissui Corporation, Tokyo 105-8676 (JP)
(72) Inventor: FUJII Kentaro, Saiki-shi, Oita 876-1204 (JP); MORISHIMA Kagayaki, Saiki-shi, Oita 876-1204 (JP); ARIMOTO Ippei, Saiki-shi, Oita 876-1204 (JP)
(74) Representative: Mewburn Ellis LLP
(86) International application number: PCT/JP2022/042418
(87) International publication number: WO 2023/090322

(57) **Abstract**

A cephalopod breeding method, which is for breeding cephalopod larvae in a breeding water tank, comprises, during the floating breeding period of the cephalopod larvae, forming a high concentration area where the salinity concentration is higher compared to seawater at the bottom of the breeding water tank and, after the passage of a predetermined time from the formation of the high concentration area, removing the high concentration area.

## Description

### Technical Field

The present disclosure relates to a rearing method of cephalopods, a prevention method of protozoa, an extermination method of protozoa, and a cephalopod larva.

### Background Art

As preference and interests in resource conservation are increasing among consumers in recent years, there is a demand for the development of aquaculture techniques also for cephalopods.

For example, Patent Document 1 discloses a shelter for breeding an octopus and an aquaculture system for an octopus.

### Citation List

### Patent Literature

Patent Document 1: JP 2017-006054 A

### Summary of Invention

### Technical Problem

For a method for increasing the production of cephalopods, reducing the mortality of larvae is required. However, aquaculture techniques in the art have often been associated with a problem of high mortality.

An object of the present disclosure is to provide a technique for reducing mortality in breeding a cephalopod larva.

### Solution to Problem

The present disclosure provides the following.
[1] A rearing method of cephalopods for breeding a cephalopod larva in a rearing tank, the method comprising:
   in a floating rearing period of the cephalopod larva,
   forming a high-concentration region at a bottom part of the rearing tank, the high-concentration region having a salt concentration higher than that of seawater; and
   removing the high-concentration region after a predetermined time has elapsed from the forming of the high-concentration region.
[2] The rearing method of cephalopods according to [1], wherein the forming of the high-concentration region and the removing of the high-concentration region are performed in at least a part of a period until the cephalopod larva is 15 days old.
[3] The rearing method of cephalopods according to [1] or [2], wherein the bottom part of the rearing tank is within 5 cm from the deepest part of the rearing tank.
[4] The rearing method of cephalopods according to any one of [1] to [3], wherein a salt concentration in the high-concentration region is 40‰ or greater.
[5] The rearing method of cephalopods according to any one of [1] to [4], wherein the forming of the high-concentration region comprises supplying a high-concentration salt water and/or a solid salt to the bottom part of the rearing tank.
[6] The rearing method of cephalopods according to [5], wherein the high-concentration salt water and/or the solid salt comprises at least one salt selected from the group consisting of sodium chloride, potassium chloride, magnesium chloride, magnesium sulfate, calcium sulfate, and calcium chloride.
[7] The rearing method of cephalopods according to [5] or [6], wherein in the forming of the high-concentration region, the high-concentration salt water and/or the solid salt is supplied to the bottom part to avoid mixing with water in an upper part of the rearing tank.
[8] The rearing method of cephalopods according to [7], wherein in the forming of the high-concentration region, the high-concentration salt water is supplied using a supply means connecting an outside of the rearing tank and the bottom part of the rearing tank.
[9] The rearing method of cephalopods according to [8], wherein the supply means is a piping.
[10] The rearing method of cephalopods according to [8] or [9], wherein in the removing of the high-concentration region, the supply means is used as a removal means for removing water present in the high-concentration region.
[11] The rearing method of cephalopods according to any one of [1] to [10], wherein the predetermined time is 15 minutes or more and 60 minutes or less.
[12] The rearing method of cephalopods according to any one of [1] to [11], wherein in the removing of the high-concentration region, water present in the high-concentration region is removed using a removal means connecting the outside of the rearing tank and the bottom part of the rearing tank.
[13] The rearing method of cephalopods according to [12], wherein the removal means is a piping.
[14] The rearing method of cephalopods according to any one of [1] to [13], wherein the forming of the high-concentration region and the removing of the high-concentration region are performed a plurality of times in the rearing period.
[15] The rearing method of cephalopods according to any one of [1] to [14], wherein in the floating rearing period of the cephalopod larva, a protozoan density in water in the rearing tank is controlled to be 350 individuals/mL or less.
[16] The rearing method of cephalopods according to [15], wherein a protozoan to be measured for the protozoan density is a flagellate or a ciliate.
[17] A rearing method of cephalopods for breeding a cephalopod larva in a rearing tank, wherein in the floating rearing period of the cephalopod larva, a protozoan density in water in the rearing tank is controlled to be 350 individuals/mL or less.
[18] The rearing method of cephalopods according to [17], wherein a protozoan to be measured for the protozoan density is a flagellate or a ciliate.
[19] A prevention method of protozoa for preventing a protozoan from developing in a rearing tank in breeding a cephalopod larva in the rearing tank, the method comprising: in a floating rearing period of the cephalopod larva,
   forming a high-concentration region at a bottom part of the rearing tank, the high-concentration region having a salt concentration higher than that of seawater; and
   removing the high-concentration region after a predetermined time has elapsed from the forming of the high-concentration region.
[20] The prevention method of protozoa according to [19], wherein the forming of the high-concentration region and the removing of the high-concentration region are performed in at least a part of a period until the cephalopod larva is 15 days old.
[21] The prevention method of protozoa according to [19] or [20], wherein the bottom part of the rearing tank is within 5 cm from the deepest part of the rearing tank.
[22] The prevention method of protozoa according to any one of [19] to [21], wherein a salt concentration in the high-concentration region is 40‰ or greater.
[23] The prevention method of protozoa according to any one of [19] to [22], wherein the forming of the high-concentration region comprises supplying a high-concentration salt water and/or a solid salt to the bottom part of the rearing tank.
[24] The prevention method of protozoa according to [23], wherein the high-concentration salt water and/or the solid salt comprises at least one salt selected from the group consisting of sodium chloride, potassium chloride, magnesium chloride, magnesium sulfate, calcium sulfate, and calcium chloride.
[25] The prevention method of protozoa according to [23] or [24], wherein in the forming of the high-concentration region, the high-concentration salt water and/or the solid salt is supplied to the bottom part to avoid mixing with water in an upper part of the rearing tank.
[26] The prevention method of protozoa according to [25], wherein in the forming of the high-concentration region, the high-concentration salt water is supplied using a supply means connecting an outside of the rearing tank and the bottom part of the rearing tank.
[27] The prevention method of protozoa according to [26], wherein the supply means is a piping.
[28] The prevention method of protozoa according to [26] or [27], wherein in the removing of the high-concentration region, the supply means is used as a removal means for removing water present in the high-concentration region.
[29] The prevention method of protozoa according to any one of [19] to [28], wherein the predetermined time is 15 minutes or more and 60 minutes or less.
[30] The prevention method of protozoa according to any one of [19] to [29], wherein in the removing of the high-concentration region, water present in the high-concentration region is removed using a removal means connecting the outside of the rearing tank and the bottom part of the rearing tank.
[31] The prevention method of protozoa according to [30], wherein the removal means is a piping.
[32] The prevention method of protozoa according to any one of [19] to [31], wherein the forming of the high-concentration region and the removing of the high-concentration region are performed a plurality of times in the rearing period.
[33] The prevention method of protozoa according to any one of [19] to [32], wherein the protozoan is a flagellate or a ciliate.
[34] The prevention method of protozoa according to any one of [19] to [33], wherein in the floating rearing period, a protozoan density in water in the rearing tank is controlled to be 350 individuals/mL or less.
[35] A extermination method of protozoa for exterminating a protozoan from an inside of a rearing tank in breeding a cephalopod larva in the rearing tank, the method comprising:
   in a floating rearing period of the cephalopod larva,
   forming a high-concentration region at a bottom part of the rearing tank, the high-concentration region having a salt concentration higher than that of seawater; and
   removing the high-concentration region after a predetermined time has elapsed from the forming of the high-concentration region.
[36] The extermination method of protozoa according to [35], wherein the forming of the high-concentration region and the removing of the high-concentration region are performed in at least a part of a period until the cephalopod larva is 15 days old.
[37] The extermination method of protozoa according to [35] or [36], wherein the bottom part of the rearing tank is within 5 cm from the deepest part of the rearing tank.
[38] The extermination method of protozoa according to any one of [35] to [37], wherein a salt concentration in the high-concentration region is 40‰ or greater.
[39] The extermination method of protozoa according to any one of [35] to [38], wherein the forming of the high-concentration region comprises supplying a high-concentration salt water and/or a solid salt to the bottom part of the rearing tank.
[40] The extermination method of protozoa according to [39], wherein the high-concentration salt water and/or the solid salt comprises at least one salt selected from the group consisting of sodium chloride, potassium chloride, magnesium chloride, magnesium sulfate, calcium sulfate, and calcium chloride.
[41] The extermination method of protozoa according to [39] or [40], wherein in the forming of the high-concentration region, the high-concentration salt water and/or the solid salt is supplied to the bottom part to avoid mixing with water in an upper part of the rearing tank.
[42] The extermination method of protozoa according to [41], wherein in the forming of the high-concentration region, the high-concentration salt water is supplied using a supply means connecting an outside of the rearing tank and the bottom part of the rearing tank.
[43] The extermination method of protozoa according to [42], wherein the supply means is a piping.
[44] The extermination method of protozoa according to [42] or [43], wherein in the removing of the high-concentration region, the supply means is used as a removal means for removing water present in the high-concentration region.
[45] The extermination method of protozoa according to any one of [35] to [44], wherein the predetermined time is 15 minutes or more and 60 minutes or less.
[46] The extermination method of protozoa according to any one of [35] to [45], wherein in the removing of the high-concentration region, water present in the high-concentration region is removed using a removal means connecting the outside of the rearing tank and the bottom part of the rearing tank.
[47] The extermination method of protozoa according to [46], wherein the removal means is a piping.
[48] The extermination method of protozoa according to any one of [35] to [47], wherein the forming of the high-concentration region and the removing of the high-concentration region are performed a plurality of times in the rearing period.
[49] The extermination method of protozoa according to any one of [35] to [48], wherein the protozoan is a flagellate or a ciliate.
[50] The extermination method of protozoa according to any one of [35] to [49], wherein in the floating rearing period, a protozoan density in water in the rearing tank is controlled to be 350 individuals/mL or less.
[51] A cephalopod larva bred in a rearing tank by a breeding method comprising:
   in a floating rearing period of the cephalopod larva,
   forming a high-concentration region at a bottom part of the rearing tank, the high-concentration region having a salt concentration higher than that of seawater; and
   removing the high-concentration region after a predetermined time has elapsed from the forming of the high-concentration region.
[52] The cephalopod larva according to [51], wherein the forming of the high-concentration region and the removing of the high-concentration region are performed in at least a part of a period until the cephalopod larva is 15 days old.
[53] The cephalopod larva according to [51] or [52], wherein the bottom part of the rearing tank is within 5 cm from the deepest part of the rearing tank.
[54] The cephalopod larva according to any one of [51] to [53], wherein a salt concentration in the high-concentration region is 40‰ or greater.
[55] The cephalopod larva according to any one of [51] to [54], wherein the forming of the high-concentration region comprises supplying a high-concentration salt water and/or a solid salt to the bottom part of the rearing tank.
[56] The cephalopod larva according to [55], wherein the high-concentration salt water and/or the solid salt comprises at least one salt selected from the group consisting of sodium chloride, potassium chloride, magnesium chloride, magnesium sulfate, calcium sulfate, and calcium chloride.
[57] The cephalopod larva according to [55] or [56], wherein in the forming of the high-concentration region, the high-concentration salt water and/or the solid salt is supplied to the bottom part to avoid mixing with water in an upper part of the rearing tank.
[58] The cephalopod larva according to [57], wherein in the forming of the high-concentration region, the high-concentration salt water is supplied using a supply means connecting an outside of the rearing tank and the bottom part of the rearing tank.
[59] The cephalopod larva according to [58], wherein the supply means is a piping.
[60] The cephalopod larva according to [58] or [59], wherein in the removing of the high-concentration region, the supply means is used as a removal means for removing water present in the high-concentration region.
[61] The cephalopod larva according to any one of [51] to [60], wherein the predetermined time is 15 minutes or more and 60 minutes or less.
[62] The cephalopod larva according to any one of [51] to [61], wherein in removing the high-concentration region, water present in the high-concentration region is removed using a removal means connecting the outside of the rearing tank and the bottom part of the rearing tank.
[63] The cephalopod larva according to [62], wherein the removal means is a piping.
[64] The cephalopod larva according to any one of [51] to [63], wherein the forming of the high-concentration region and the removing of the high-concentration region are performed a plurality of times in the rearing period.
[65] A cephalopod larva resistant to a protozoan.
[66] The cephalopod larva according to [65], wherein the protozoan is a flagellate or a ciliate.
[67] The cephalopod larva according to [65] or [66],
   wherein
   the cephalopod larva is bred in a rearing tank by a breeding method comprising:
   in a floating rearing period of the cephalopod larva,
      forming a high-concentration region at a bottom part of the rearing tank, the high-concentration region having a salt concentration higher than that of seawater; and
      removing the high-concentration region after a predetermined time has elapsed from the forming of the high-concentration region,
   in the floating rearing period of the cephalopod larva, daily mortality is 8.00 or less even if a protozoan density in water in the rearing tank is 150 individuals/mL or more.
[68] The cephalopod larva according to [67], wherein the high-concentration region is formed once or a plurality of times.

### Advantageous Effects of Invention

An object of the present disclosure is to provide a technique for reducing mortality in breeding a cephalopod larva.

### Brief Description of Drawing

FIGS. 1 (a) and 1 (b) are schematic configuration diagrams of an apparatus for carrying out a rearing method of cephalopods according to the present embodiment.
FIG. 2 is a diagram illustrating a procedure for forming a high-concentration region in a rearing tank.

### Description of Embodiments

Hereinafter, embodiments for carrying out the present disclosure will be described in detail with reference to the accompanying drawings. In the descriptions of the drawings, the same components are given the same reference signs, and duplicate descriptions will be omitted.

### Cephalopod Breeding Apparatus and Rearing method of cephalopods

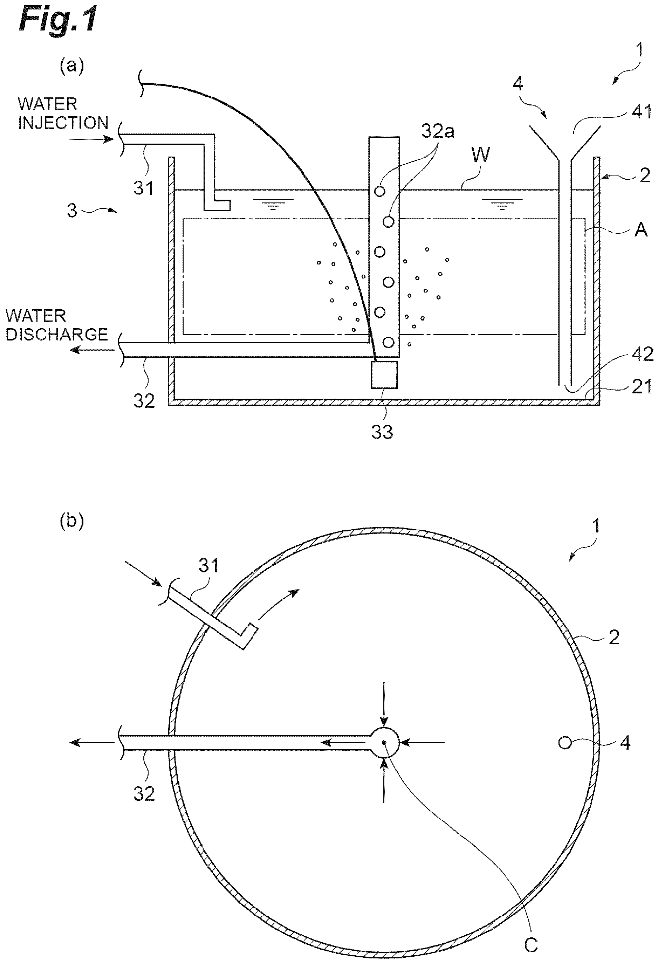

FIG. 1 is a schematic configuration diagram of a cephalopod breeding apparatus for carrying out a rearing method of cephalopods described in the present embodiment. As illustrated in FIG. 1, a cephalopod breeding apparatus 1 is configured by including a rearing tank 2 for breeding a cephalopod, a water exchange part 3 serving as a water exchange means for exchanging water in the rearing tank 2, and a salt feed part 4 for forming a high-concentration region having a high salt concentration in the rearing tank 2. FIG. 1 (a) illustrates a vertical cross section of the rearing tank 2, and FIG. 1 (b) illustrates a top view of a vicinity of the bottom surface of the rearing tank 2. In the rearing tank 2, a cephalopod is bred using a salt water for breeding. In the present specification, a salt water may be referred to simply as water.

The cephalopod to be bred using the cephalopod breeding apparatus 1 is not particularly limited; however, for larvae after hatching in the growth stage, types floating in the sea are targeted. Examples of such cephalopods include, but are not limited to, an oval squid (*Sepioteuthis lessoniana*)*,* a Japanese flying squid (*Todarodes pacificus*)*,* a spear squid (*Doryteuthis bleekeri*)*, Octopus maya,* a small octopus (*Octopus ocellatus*)*,* a common octopus (*Octopus vulgaris*)*,* a giant Pacific octopus (*Octopus dofleini*)*,* a Chestnut octopus (*Octopus conispadiceus*)*,* and a long-armed octopus (*Octopus minor*)*.*

The cephalopod floats in water in the rearing tank 2 in the larval stage after hatching as described above. The cephalopod breeding apparatus 1 described above can be used in a floating rearing period of a cephalopod larva. In the present disclosure, the floating rearing period refers to a period of breeding in a floating state after hatching and before bottom breeding. For example, for a common octopus, the floating rearing period is from 0 to about 23 days old. In the present disclosure, "days old" refers to the number of days that have elapsed since hatching and is expressed in days with the date of hatching being 0 days old. In addition, for a common octopus, the body length of a common octopus in the breeding floating period is about 0.8 mm or less. However, there is a possibility that the days of age and body length of a common octopus in the floating rearing period vary depending on the breeding environment. Thus, the days of age and body length are not limited to the ranges described above. In addition, the days of age and body length in the transition period to the bottom breeding vary depending on the species. Thus, the period when the cephalopod breeding apparatus 1 can be used may be individually set according to the species.

As illustrated in FIG. 1, the cephalopod breeding apparatus 1 is configured by including the water exchange part 3 for exchanging water in the rearing tank 2. The water exchange part 3 is configured by including a water injection part 31 and a water discharge part 32. In addition, the water exchange part 3 may include aeration equipment 33 as illustrated in FIG. 1. The cephalopod breeding apparatus 1 may be provided with equipment related to breeding a cephalopod, such as feed supply equipment, in addition to the equipment illustrated in FIG. 1.

The shape, volume, and the like of the rearing tank 2 are not particularly limited. FIG. 1 illustrates an example in which the shape of the space for storing water W, which is a salt water for breeding, inside the rearing tank 2 is cylindrical with a circular bottom surface. Storing water in a space circular and cylindrical in plan view as illustrated in FIG. 1 can reduce the deviation of movement of water in the rearing tank 2 to some extent. As for the volume, a volume sufficient for breeding a larva in the floating rearing period of a cephalopod larva is preferably secured. The volume of the rearing tank 2 may be, for example, from 100 L to 150 × 10³ L or from 500 L to 150 × 10³ L. A cephalopod larva may be placed in the rearing tank 2 for the individual number of the cephalopod larva to be from 1 to 10 per liter of the water W.

The water injection part 31 supplies a salt water for breeding into the rearing tank 2. The salt water for breeding is, for example, water obtained by subjecting seawater to a predetermined treatment, such as sterilization treatment. The water injection part 31 is a piping for supplying water to be injected into the rearing tank 2 from an external supply source. Examples of the external supply source include a water tank or a tank that stores a salt water after being subjected to a predetermined treatment. A water injection port is provided at an end of the water injection part 31. The water injection port may be arranged, for example, in an upper part of the rearing tank 2 and may be configured to supply a salt water in the horizontal direction along the circumferential direction in the vicinity of a peripheral edge, which is the vicinity of a side wall of the rearing tank 2, as illustrated in FIG. 1 (b). In addition, the water injection with the water injection part 31 may be performed, for example, with a drive of a pump provided in the piping constituting the water injection part 31 although the pump is not illustrated.

The water discharge part 32 discharges a salt water in the rearing tank 2. The water discharge part 32 is a piping provided with discharge outlets 32a for incorporating water in the rearing tank 2, and the water incorporated from the discharge outlets 32a into the water discharge part 32 is discharged to the rearing tank 2 through the piping.

In the piping constituting the water discharge part 32, the piping provided with the discharge outlets 32a may be configured to extend in the vertical direction at the center C of the rearing tank 2 as illustrated in FIGS. 1 (a) and 1 (b). In this case, the water is discharged from the center in the rearing tank 2. Examples of the destination of the discharge of the internal water include the ocean. Before the water is discharged to the ocean or the like, the water to be discharged may be disinfected or sterilized. The disinfection or sterilization is a method that does not discharge live bacteria or protozoa as they are and may be performed, for example, with a chemical agent, chlorine, ozone, electricity, or a filter, or using a combination of these. The water discharge with the water discharge part 32 may be performed, for example, with a drive of a pump provided in the piping constituting the water discharge part 32 although the pump is not illustrated. In addition, the piping may be arranged to be continuous with an extending piping in the vertical direction and to extend in the radial direction from the center C of the rearing tank 2.

The aeration equipment 33 is installed, for example, near the water bottom at the center C of the rearing tank 2 and supplies air bubbles incorporated into the rearing tank 2 with an air pump or the like into the water W. The aeration equipment 33 may have a gas feed part that is installed near the water bottom of the rearing tank 2 and discharges bubbles into water and a gas pipe that is connected to an air pump and supplies air incorporated with the air pump to the gas feed part although these are not incorporated. As illustrated in FIG. 1, performing the aerating operation in a state where the gas supplying part is placed at the water bottom at the center C of the rearing tank 2 can form a flow of bubbles rising in water around the discharge outlets 32a near the center C in the rearing tank 2.

Examples of a method of supplying air into the water W in the rearing tank 2 without using the aeration equipment 33 include a method of providing the water injection part 31 above the water. Placing the water injection part 31 at a position separated from the water surface and dropping a salt water for breeding from the water injection part 31 can mix air into the water along with the drop of the salt water. As described above, the method of supplying air into the water W in the rearing tank 2 is not limited to the method using the aeration equipment 33.

In the cephalopod breeding apparatus 1 described above, water in the rearing tank 2 can be exchanged by simultaneously performing water injection with the water injection part 31 and water discharge with the water discharge part 32. With the water injection amount per unit time with the water injection part 31 adjusted to the same as the water discharge amount per unit time with the water discharge part 32, the water is exchanged while the water amount in the rearing tank 2 is maintained. As long as the water amount that does not interfere with breeding a cephalopod larva is secured in the rearing tank 2, the amounts of the water injection and the water discharge need not be the same. As long as the water amount that does not interfere with breeding a cephalopod larva is secured in the rearing tank 2, the water injection or the water discharge, or both of them may be temporarily stopped. In addition, as illustrated in FIG. 1 (b), the water injection part 31 is provided near the peripheral edge of the rearing tank 2, and the discharge outlets 32a of the water discharge part 32 are provided near the center C of the rearing tank 2, and this creates a flow of water from the vicinity of the peripheral edge toward the center C in the rearing tank 2. Furthermore, performing the water injection and discharge with the water injection part 31 and the water discharge part 32 while operating the aeration equipment 33 allows a part of the water flow to go upward and thus forms a gentle circulation flow also in the vertical direction.

The arrangement of the water injection part 31, the water discharge part 32, and the aeration equipment 33 is an example and can be appropriately changed. For example, in the example illustrated in FIG. 1, the water injection with the water injection part 31 may be performed in the vicinity of the water bottom instead of being performed in the vicinity of the water surface in the rearing tank 2. In addition, the water discharge with the water discharge part 32 may also be performed from the vicinity of the water bottom at the center C of the rearing tank 2. In this case, the water injection and discharge may be performed below a floating region A where cephalopod larvae can float.

Furthermore, the cephalopod breeding apparatus 1 is provided with the salt feed part 4 for forming a high-concentration region having a salt concentration higher than that of seawater at the bottom part, which is the water bottom of the rearing tank 2.

The bottom part of the rearing tank 2, the bottom part being a region where the high-concentration region is formed, refers to a part of the region having a salt water in the rearing tank 2, the part close to the bottom surface. The bottom part of the rearing tank 2 has features in that an organic substance, such as a dead individual of a cephalopod larva during breeding, residual feed, or excrement, accumulates, making the bottom part a source of a protozoan, the problem in the present disclosure.

Specifically, the bottom part of the rearing tank 2 refers to a height range of 15 cm or less, 10 cm or less, 5 cm or less, 3 cm or less, 1 cm or less, or 0.5 cm or less from the water bottom relative to the water depth of the water W in the rearing tank 2. In addition, the bottom part may be in a height range of 20% or less, 15% or less, 10% or less, 5% or less, 3% or less, or 1% or less relative to the water depth of the water W in the rearing tank 2. These ranges are regions where an organic substance, such as a dead individual of a cephalopod larva, residual feed, excrement, or the like produced when a cephalopod larva is bred in the rearing tank 2 may remain as a sediment. Many rearing tanks 2 used for breeding a cephalopod larva have a water depth of, for example, approximately 80 cm to 200 cm. For a water depth of 80 cm, the height ranges described above are 18.75% or less, 12.5% or less, 6.25% or less, 3.75% or less, 1.25% or less, or 0.625% or less from the water bottom, respectively, relative to the water depth of the water W, which are sufficiently small ranges relative to the water depth. In addition, the lower limit of the bottom part of the rearing tank 2, the bottom part being the region where the high-concentration region is formed, presents no problem as long as it is set to include the sediment; however, for example, the range of the bottom part may be 0.01 cm or more, 0.03 cm or more, 0.05 cm or more, 0.07 cm or more, or 0.1 cm or more from the water bottom relative to the water depth of the water W. Furthermore, the lower limit of the bottom part may be set to be 0.005% or greater, 0.01% or greater, 0.03% or greater, 0.5% or greater, or 0.1% or greater relative to the water depth of the water W in the rearing tank 2. The water bottom corresponds to a bottom wall 21 of the rearing tank 2.

The salt feed part 4 supplies a salt to the water bottom, where the high-concentration region is formed. The salt feed part 4 may be configured as a piping, for example, as illustrated in FIG. 1. In the example illustrated in FIG. 1, the salt feed part 4 may be installed with a feed inlet 41 being provided above the water W and an outlet 42 being provided at the water bottom. In the case of providing the feed inlet 41 above the water W, the feed inlet 41 is located above the water surface. In addition, the feed inlet 41 may have a structure in which the inner diameter increases toward the end portion to facilitate the feeding of a salt.

In the rearing tank 2, cephalopod larvae do not float in the vicinity of the water bottom but float in the floating region A near a height range, for example, of 20% to 85% from the water bottom relative to the water depth of the water W. Thus, in a water tank with a water depth of approximately 80 cm to 200 cm, a region where the high-concentration region is formed, the region of 15 cm or less from the water bottom, is a region below the floating region A. In the case of using the salt feed part 4 illustrated in FIG. 1, the salt feed part 4 is not opened near the floating region A, and thus the salt fed from the feed inlet 41 is discharged from the outlet 42 into water without passing through the floating region A.

The high-concentration region is a region provided intermittently in a floating rearing period of a cephalopod larva. Thus, in the middle of the floating rearing period of a cephalopod larva, a salt for forming the high-concentration region is fed to the water bottom of the rearing tank 2 to form a region having a higher salt concentration compared with that of water in other regions at the water bottom. The salt concentration in the high-concentration region is higher than the concentration in seawater, which is the water W introduced into the rearing tank 2, and may be, for example, 40‰ or greater, 45‰ or greater, 50‰ or greater, 55‰ or greater, 60‰ or greater, 65‰ or greater, 70‰ or greater, 75‰ or greater, 80‰ or greater, 85‰ or greater, 90‰ or greater, 95‰ or greater, or 100‰ or greater. The salt concentration can be measured using, for example, an electrical conductivity type salt concentration meter. The upper limit of the salt concentration in the high-concentration region presents no problem as long as the salt is dissolved; however, for example, the salt concentration may be 250‰ or less, 200‰ or less, or 180‰ or less. The high-concentration region may contain a substance that increases the specific gravity. Such a substance is exemplified by glycerol. Increasing the specific gravity makes it easier to retain the high-concentration region at the bottom part of the rearing tank 2.

As described above, the rearing method of cephalopods with the cephalopod breeding apparatus 1 is a method of breeding a cephalopod larva in the rearing tank 2.

Here, the rearing method of cephalopods with the cephalopod breeding apparatus 1 comprises:
in the floating rearing period of a cephalopod larva,
forming the high-concentration region at the bottom part of the rearing tank 2, the high-concentration region having a salt concentration higher than that of seawater; and
removing the high-concentration region after a predetermined time has elapsed from the forming of the high-concentration region.

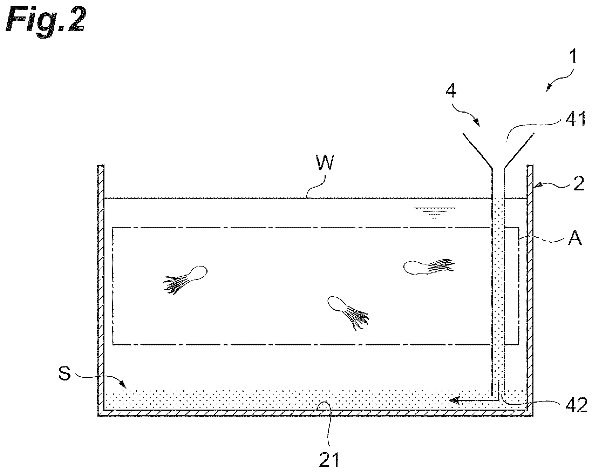

FIG. 2 illustrates a state where a high-concentration region S is formed in the rearing tank 2. In the example illustrated in FIG. 2, a salt is supplied into the rearing tank 2 using the salt feed part 4, resulting in a state where the high-concentration region S is formed at the bottom part of the rearing tank 2.

FIG. 2 illustrates a state where the high-concentration region S is formed by supplying a high-concentration salt water from the salt feed part 4. The high-concentration salt water may comprise at least one salt selected from the group consisting of sodium chloride, potassium chloride, magnesium chloride, magnesium sulfate, calcium sulfate, and calcium chloride. In addition, the concentration of the high-concentration salt water can be set higher than the salt concentration in the high-concentration region S.

The salt supplied from the salt feed part 4 is not limited to the high-concentration salt water. For example, the high-concentration region S may be formed by supplying a solid salt from the salt feed part 4. The solid salt may comprise at least one salt selected from the group consisting of sodium chloride, potassium chloride, magnesium chloride, magnesium sulfate, calcium sulfate, and calcium chloride. As described above, the salt supplied from the salt feed part 4 may comprise at least one salt selected from the group consisting of sodium chloride, potassium chloride, magnesium chloride, magnesium sulfate, calcium sulfate, and calcium chloride.

In addition, for the salt to be supplied from the salt feed part 4, the high-concentration salt water and the solid salt may be used in combination. In the case of feeding a solid salt to form the high-concentration region S, the amount of the solid salt to be fed can be set in consideration of the salt concentration in the high-concentration region S. Using the solid salt, for example, in granular form or powder form increases the surface area and thus facilitates the dissolution of the solid salt and the adjustment of the salt concentration. As described above, the salt feed part 4 may supply the high-concentration salt water and/or the solid salt to the bottom part of the rearing tank 2. That is, the salt feed part 4 may supply either one of the high-concentration salt water or the solid salt, or both of the high-concentration salt water and the solid salt to the bottom part of the rearing tank 2. In other words, the salt feed part 4 may supply at least one selected from the group consisting of the high-concentration salt water and the solid salt to the bottom part of the rearing tank 2.

The high-concentration region S to be formed at the bottom part of the rearing tank 2 is intended to prevent development and proliferation of a protozoan otherwise developing in the rearing tank 2. A protozoan can develop and proliferate at the water bottom of the rearing tank 2 and thus can be exterminated by forming the high-concentration region S at the water bottom of the water tank. The salt concentration described above is a salt concentration suitable for exterminating a protozoan, and this can exterminate a protozoan in a relatively short time. In addition, the high-concentration region S is not formed in the floating region A of a cephalopod larva but is formed only at the water bottom. Thus, forming the high-concentration region S prevents not only a protozoan but also prevents a cephalopod larva from being killed.

In addition, this high-concentration region S is removed after a predetermined time has elapsed. Forming the high-concentration region S in the rearing tank 2 can change the salt concentration in the entire rearing tank 2 due to the salt content in the high-concentration region S. Thus, the high-concentration region S is removed at the timing when the extermination of a protozoan has progressed to some extent. The predetermined time can be set according to the salt concentration in the high-concentration region S. As an example, the predetermined time may be 15 minutes or more and 60 minutes or less. An experimental example of exposing a protozoan to a salt water with a salt concentration of 40‰ confirmed that the protozoan can be exterminated in 32 minutes and 40 seconds. From this result, a protozoan in the rearing tank 2 is expected to be mostly removed by maintaining the high-concentration region S for 15 minutes or more. On the other hand, with the predetermined time of 60 minutes or less, the method can reduce the change in the salt concentration of water in the rearing tank 2 while reliably exterminating a protozoan. The predetermined time may be 15 minutes or more, 20 minutes or more, 25 minutes or more, 30 minutes or more, 33 minutes or more, or 35 minutes or more. Furthermore, as long as the high-concentration region S is maintained, there is no problem; however, the predetermined time may be, for example, 180 minutes or less, 150 minutes or less, 120 minutes or less, 100 minutes or less, 80 minutes or less, 60 minutes or less, 50 minutes or less, 40 minutes or less, or 30 minutes or less. With a short predetermined time, the method may fail to effectively exterminate a protozoan. With a long predetermined time, the method may fail to maintain the high-concentration region S. Furthermore, with a long predetermined time, the high-concentration region S may affect the growth of a cephalopod larva during swimming.

An example of the method of removing the high-concentration region S includes a method of utilizing the salt feed part 4 also for removing water present in the high-concentration region S. That is, the high-concentration region S can be removed by sucking a salt water in the high-concentration region S from the outlet 42 of the salt feed part 4 illustrated in FIG. 2 and discharging the salt water to the outside from the feed inlet 41. Water in the vicinity of the high-concentration region S, that is, in the bottom part of the rearing tank 2 can be removed, for example, by adjusting the sucking speed. The salt feed part 4 may be thus utilized as a removal means for removing water present in the high-concentration region S in addition to being used as a supply means for connecting an outside of the rearing tank 2 and the bottom part of the rearing tank 2.

There is a possibility that removing water present in the high-concentration region S reduces the water amount in the rearing tank 2. In view of this point, when the high-concentration region S is removed, control, such as increasing the water injection amount from the water injection part 31, may be implemented to maintain the water amount in the rearing tank 2.

The method of removing the high-concentration region S may be a method different from the method of utilizing the salt feed part 4 as the removal means. For example, in the case where the water discharge part 32 is provided at the water bottom, water present in the high-concentration region S may be removed by utilizing the water discharge part 32. In addition, in the case where a solid salt is fed to the water bottom and remains even after a predetermined time has elapsed, the solid may be removed first, and then water near the water bottom may be removed.

Furthermore, while the high-concentration region S is formed at the bottom part of the rearing tank 2, the water exchange with the water injection part 31 and the water discharge part 32 need not be performed. Water in the rearing tank 2 can be moved by performing the water injection and discharge with the water injection part 31 and the water discharge part 32. Thus, there is a possibility that water present in the high-concentration region S formed at the bottom part is mixed with water above the high-concentration region S. To avoid such a situation, for example, the control may be changed to stop the water exchange with the water injection part 31 and the water discharge part 32 or to minimize the water injection and discharge amount. Alternatively, at the same time, the aeration equipment 33 may be stopped or the amount of aeration may be reduced to make it easier to maintain the high-concentration region S. This is because the operation above allows water in the rearing tank 2 to be nearly stationary and this makes it easier to maintain the high-concentration region S. In the case of removing the high-concentration region S, the amount of water to be removed is adjusted in a range in which the high-concentration region S can be removed, and water other than that may be removed in a larger amount at the time of removal. The high-concentration region S may be colored, for example, with a food dye to enable the removal of the high-concentration region S to be visually confirmed.

As described above, the rearing method of cephalopods using the cephalopod breeding apparatus 1 comprises:
in the floating rearing period of a cephalopod larva:
forming the high-concentration region S at the bottom part of the rearing tank 2, the high-concentration region S having a salt concentration higher than that of seawater; and
removing the high-concentration region after a predetermined time has elapsed from the forming of the high-concentration region. The removing of the high-concentration region includes eliminating the high-concentration region S as a whole by stirring the whole after holding the high-concentration region S for a certain time. The method can reduce the mortality of a cephalopod larva in the rearing tank 2 by forming the high-concentration region S and removing it after a predetermined time as described above.

In the floating rearing period of a cephalopod larva, the protozoan development in a water tank may cause death of the cephalopod larva. This is probably because a protozoan that has entered the mantle eat the cephalopod larva. To overcome this, the high-concentration region S is provided at the bottom part of the rearing tank 2, and this can remove a protozoan even if a protozoan develops in the water tank.

The forming and removing of the high-concentration region S may be performed in at least a part of the period until the cephalopod larva is 15 days old. In the period until the cephalopod larva is 15 days old, death due to protozoan proliferation is likely to occur. In addition, a protozoan developing and proliferating during this period can be derived from a salt water, feed, and the like placed in the rearing tank 2. Thus, the method can reduce the risk of development and proliferation of a protozoan in the subsequent period by forming and removing the high-concentration region S in the period until the cephalopod larva is 15 days old. A series of steps including the forming and removing of the high-concentration region S may be performed in at least a part of the period until the cephalopod larva is 15 days old. The period until the cephalopod larva is 15 days old corresponds to the period from 0 days of age to 15 days of age. In this case, the series of steps may be performed in at least a part of the period on and after 16 days of age or need not be performed in the period on and after 16 days of age.

In addition, the forming and removing of the high-concentration region S may be performed once or may be performed a plurality of times in the rearing period. During the rearing period of a cephalopod larva, a protozoan can develop and proliferate due to a dead body of the larva, feed, or the like. Thus, the forming and removing of the high-concentration region S may be performed when the tendency of a protozoan to be proliferating is confirmed. As described above, a series of steps including the forming and removing of the high-concentration region S may be repeated in the rearing period. That is, a series of steps including the forming and removing of the high-concentration region S may be performed a plurality of times in the rearing period.

In addition, the bottom part of the rearing tank 2 in which the high-concentration region S is provided may be within 5 cm from the deepest part of the rearing tank. The deepest part of the rearing tank is a part where an organic substance, such as a dead individual of a cephalopod larva during breeding, residual feed, or excrement, which is a source of a protozoan, accumulates or can accumulate. Furthermore, the salt concentration in the high-concentration region S may be 40‰ or greater, 45‰ or greater, 50‰ or greater, 55‰ or greater, 60‰ or greater, 65‰ or greater, 70‰ or greater, 75‰ or greater, 80‰ or greater, 85‰ or greater, 90‰ or greater, 95‰ or greater, or 100‰ or greater. The upper limit of the salt concentration in the high-concentration region S presents no problem as long as the salt is dissolved; however, the salt concentration may be, for example, 250‰ or less, 200‰ or less, or 180‰ or less. In this case, with the salt concentration in the high-concentration region S in the above range, the method can appropriately remove a protozoan. On the other hand, with the high-concentration region S within 5 cm from the deepest part of the rearing tank 2, the method can appropriately remove a protozoan in the region where the protozoan can be present, and minimize the influence on a cephalopod larva being bred in the rearing tank 2.

In addition, the predetermined time, which is the time for forming the high-concentration region S, may be 15 minutes or more, 20 minutes or more, 25 minutes or more, 30 minutes or more, 33 minutes or more, or 35 minutes or more. Furthermore, as long as the high-concentration region S is maintained, there is no problem; however, the predetermined time may be, for example, 180 minutes or less, 150 minutes or less, 120 minutes or less, 100 minutes or less, 80 minutes or less, 60 minutes or less, 50 minutes or less, 40 minutes or less, or 30 minutes or less. With the predetermined time in such a range, the method can appropriately remove a protozoan during the time when the high-concentration region S is formed.

Forming the high-concentration region S may comprise supplying a high-concentration salt water and/or a solid salt to the bottom part of the rearing tank 2. Using the solid salt, for example, in granular form or powder form increases the surface area. This facilitates the dissolution of the solid salt and the adjustment of the salt concentration. The high-concentration salt water and/or the solid salt may comprise at least one salt selected from the group consisting of sodium chloride, potassium chloride, magnesium chloride, magnesium sulfate, calcium sulfate, and calcium chloride. A substance of these is supplied to the bottom part of the rearing tank 2, and this can appropriately form the high-concentration region S at the bottom part.

In addition, in forming the high-concentration region S, the high-concentration salt water and/or the solid salt may be supplied to the bottom part to avoid mixing with water in an upper part of the rearing tank 2. In this case, the method can reduce the change in the salt concentration of the floating region A of a cephalopod larva, which can be present in the upper part. In the case of using a solid salt, for example, a large mass of a solid salt fed from the upper part of the rearing tank 2 does not dissolve so much by the time it reaches the bottom part and gradually dissolves after it reaches the bottom part, and this can form the high-concentration region S accordingly.

In forming the high-concentration region S, the high-concentration salt water may be supplied using a supply means connecting the outside of the rearing tank 2 and the bottom part of the rearing tank 2. In addition, the supply means may be a piping like the salt feed part 4.

Furthermore, in removing the high-concentration region S, water present in the high-concentration region S may be removed using a removal means connecting the outside of the rearing tank 2 and the bottom part of the rearing tank 2. Moreover, the removal means may be a piping.

Furthermore, a member functioning as a supply means like the salt feed part 4 may be used as a removal means for removing water present in the high-concentration region S. In this case, the forming and removing of the high-concentration region S can be achieved by only one means, and thus this can avoid complication of the apparatus configuration. The salt feed part 4 may be used in such a way that it is installed at the time of use and removed after use.

It can also be said that the cephalopod breeding apparatus 1 and the rearing method of cephalopods described above are an apparatus and a method capable of controlling the density of protozoa present in the rearing tank 2. That is, the cephalopod breeding apparatus 1 and the rearing method of cephalopods may control the protozoan density in water in the rearing tank 2 to be 350 individuals/mL or less in the floating rearing period. The apparatus and method can exterminate particularly a protozoan that may remain at the water bottom by forming the high-concentration region S with a high salt concentration and removing this after a predetermined period has elapsed as described above and thus can adjust the protozoan density in water to be low. Thus, the apparatus and method can prevent the protozoan proliferation and reduce the mortality of a cephalopod larva by controlling the protozoan density to be 350 individuals/mL or less as described above. The protozoan density may be controlled to be 300 individuals/mL or less, 315 individuals/mL or less, 350 individuals/mL or less, 400 individuals/mL or less, 450 individuals/mL or less, or 500 individuals/mL or less. In this case as well, the apparatus and method can prevent the protozoan proliferation and reduce the mortality of a cephalopod larva. For the protozoan density, 50 mL of breeding water near the bottom surface of the rearing tank 2 is collected, the number of protozoa is visually counted while 20 µL of the collected water is observed with a microscope, and a protozoan density per mL can be calculated. In addition, the mortality of a common octopus larva can be calculated as a ratio of the number of dead individuals to the number of bred individuals by counting the number of dead individuals from water discharged during cleaning.

In the case of breeding a common octopus as a cephalopod, examples of protozoa that can develop in the rearing tank 2 include flagellates and ciliates. More specifically, the flagellate is exemplified by *Ichthyyobodonecator,* and the ciliate is exemplified by *Uronemamarinum, Philasterides dicentrarchi, Pseudocohnilembuspersalinus, Pseudorhabdosynochus hargisi,* and *Metanophrys sinensis.* Thus, in the case of breeding using the cephalopod breeding apparatus 1, the protozoan to be measured for protozoan density may be a flagellate or a ciliate. In this case, the developing status of the protozoan in the rearing tank 2 can be grasped with better precision.

### Prevention method of protozoa

The configuration according to the present embodiment can also be referred to as a method of preventing the protozoan development, that is, a prevention method of protozoa. That is, the method of preventing the protozoan development using the cephalopod breeding apparatus 1 is a method of preventing the protozoan development in the rearing tank 2 in breeding a cephalopod larva in the rearing tank 2. In this case, the protozoan to be prevented from developing is not limited as long as the development can be prevented by the treatment with the high-concentration region S; however, it can be, for example, a flagellate or a ciliate.

The method of preventing the protozoan development comprises in the floating rearing period of a cephalopod larva:
forming the high-concentration region S at the bottom part of the rearing tank 2, the high-concentration region S having a salt concentration higher than that of seawater; and
removing the high-concentration region S after a predetermined time has elapsed from the forming of the high-concentration region. The method can exterminate a protozoan in the rearing tank 2 and reduce the mortality of a cephalopod larva by forming and removing the high-concentration region S in the rearing tank 2 as described above.

The forming and removing of the high-concentration region S can be performed in at least a part of the period until the cephalopod larva is 15 days old. This is because mortality presumably due to the protozoan development and proliferation can increase in the rearing period until 15 days of age. Thus, the method can effectively prevent the protozoan development and proliferation by forming and removing the high-concentration region S in the period described above.

In addition, the forming and removing of the high-concentration region S may be performed a plurality of times in the rearing period. During the rearing period of a cephalopod larva, a protozoan can develop and proliferate due to the dead body of the larva, feed, and/or the like. Thus, the method can further reduce the likelihood of the development of a protozoan by performing the treatment described above a plurality of times.

In addition, the bottom part of the rearing tank 2 in which the high-concentration region S is provided may be within 5 cm from the deepest part of the rearing tank. Furthermore, the salt concentration in the high-concentration region S may be 40‰ or greater, 45‰ or greater, 50‰ or greater, 55‰ or greater, 60‰ or greater, 65‰ or greater, 70‰ or greater, 75‰ or greater, 80‰ or greater, 85‰ or greater, 90‰ or greater, 95‰ or greater, or 100‰ or greater. The salt concentration can be measured using, for example, an electrical conductivity type salt concentration meter. The upper limit of the salt concentration in the high-concentration region S presents no problem as long as the salt is dissolved; however, the salt concentration may be, for example, 250‰ or less, 200‰ or less, or 180‰ or less. With the salt concentration in the high-concentration region S in the above range, the method can appropriately prevent the protozoan development. On the other hand, with the high-concentration region S within 5 cm from the deepest part of the rearing tank 2, the method can prevent the protozoan development in the region where the protozoan can develop, and minimize the influence on a cephalopod larva being bred in the rearing tank 2.

In addition, the predetermined time, which is the time for forming the high-concentration region S, may be 15 minutes or more, 20 minutes or more, 25 minutes or more, 30 minutes or more, 33 minutes or more, or 35 minutes or more. Furthermore, as long as the high-concentration region S is maintained, there is no problem; however, the predetermined time may be, for example, 180 minutes or less, 150 minutes or less, 120 minutes or less, 100 minutes or less, 80 minutes or less, 60 minutes or less, 50 minutes or less, 40 minutes or less, or 30 minutes or less. With the predetermined time in such a range, the method can appropriately prevent the protozoan development during the time when the high-concentration region S is formed. As an example, the predetermined time may be 15 minutes or more and 60 minutes or less.

Forming the high-concentration region S may comprise supplying a high-concentration salt water and/or a solid salt to the bottom part of the rearing tank 2. Using the solid salt, for example, in granular form or powder form increases the surface area. This facilitates the dissolution of the solid salt and the adjustment of the salt concentration. The high-concentration salt water and/or the solid salt may comprise at least one salt selected from the group consisting of sodium chloride, potassium chloride, magnesium chloride, magnesium sulfate, calcium sulfate, and calcium chloride. A substance of these is supplied to the bottom part of the rearing tank 2, and this can appropriately form the high-concentration region S at the bottom part.

In addition, in forming the high-concentration region S, the high-concentration salt water and/or the solid salt may be supplied to the bottom part to avoid mixing with water in an upper part of the rearing tank 2. In this case, the method can reduce the change in the salt concentration of the floating region A of a cephalopod larva, which can be present in the upper part, and thus can further reduce the influence on the cephalopod larva.

In forming the high-concentration region S, the high-concentration salt water may be supplied using a supply means connecting the outside of the rearing tank 2 and the bottom part of the rearing tank 2. In addition, the supply means may be a piping like the salt feed part 4.

Furthermore, in removing the high-concentration region S, water present in the high-concentration region S may be removed using a removal means connecting the outside of the rearing tank 2 and the bottom part of the rearing tank 2. Moreover, the removal means may be a piping.

Furthermore, a member functioning as a supply means like the salt feed part 4 may be used as a removal means for removing water present in the high-concentration region S. In this case, the forming and removing of the high-concentration region S can be achieved by only one means, and thus this can avoid complication of the apparatus configuration.

It can also be said that the prevention method of protozoa with the cephalopod breeding apparatus 1 described above is an apparatus and a method capable of controlling the density of protozoa present in the rearing tank 2 by utilizing the forming and removing of the high-concentration region S. That is, the prevention method of protozoa according to the present embodiment may control the protozoan density in water in the rearing tank 2 to be 300 individuals/mL or less, 315 individuals/mL or less, 350 individuals/mL or less, 400 individuals/mL or less, 450 individuals/mL or less, or 500 individuals/mL or less in the floating rearing period. The apparatus and method can exterminate particularly a protozoan that may remain at the water bottom by forming the high-concentration region S with a high salt concentration and removing this after a predetermined period has elapsed as described above and thus can adjust the protozoan density in water to be low. Thus, the apparatus and method can prevent the protozoan development and proliferation by controlling the protozoan density to be the above range as described above.

### Extermination method of protozoa

The configuration according to the present embodiment can also be referred to as a method of exterminating a protozoan in the rearing tank 2, that is, a extermination method of protozoa. That is, the method of exterminating a protozoan using the cephalopod breeding apparatus 1 is a method of exterminating a protozoan from the inside of the rearing tank 2 in breeding a cephalopod larva in the rearing tank 2. In this case, the protozoan to be exterminated is not limited as long as it can be exterminated by the treatment with the high-concentration region S; however, it can be, for example, a flagellate or a ciliate.

The method of exterminating a protozoan comprises in the floating rearing period of a cephalopod larva:
forming the high-concentration region S at the bottom part of the rearing tank 2, the high-concentration region S having a salt concentration higher than that of seawater; and
removing the high-concentration region S after a predetermined time has elapsed from the forming of the high-concentration region. The method can exterminate a protozoan in the rearing tank 2 and reduce the mortality of a cephalopod larva by forming and removing the high-concentration region S in the rearing tank 2 as described above.

The forming and removing of the high-concentration region S can be performed in at least a part of the period until the cephalopod larva is 15 days old. This is because mortality presumably due to the protozoan development and proliferation can increase in the rearing period until 15 days of age. Thus, the method can effectively exterminate a protozoan and can also prevent the subsequent development and proliferation by forming and removing the high-concentration region S in the period described above.

In addition, the forming and removing of the high-concentration region S may be performed a plurality of times in the rearing period. During the rearing period of a cephalopod larva, a protozoan can develop and proliferate due to the dead body of the larva, feed, and/or the like. Thus, the method can further appropriately exterminate a protozoan by performing the treatment described above a plurality of times.

In addition, the bottom part of the rearing tank 2 in which the high-concentration region S is provided may be within 5 cm from the deepest part of the rearing tank. Furthermore, the salt concentration in the high-concentration region S may be 40‰ or greater, 45‰ or greater, 50‰ or greater, 55‰ or greater, 60‰ or greater, 65‰ or greater, 70‰ or greater, 75‰ or greater, 80‰ or greater, 85‰ or greater, 90‰ or greater, 95‰ or greater, or 100‰ or greater. The salt concentration can be measured using, for example, an electrical conductivity type salt concentration meter. The upper limit of the salt concentration in the high-concentration region S presents no problem as long as the salt is dissolved; however, the salt concentration may be, for example, 250‰ or less, 200‰ or less, or 180‰ or less. With the salt concentration in the high-concentration region S in the above range, the method can appropriately exterminate a protozoan. On the other hand, with the high-concentration region S within 5 cm from the deepest part of the rearing tank 2, the method can exterminate a protozoan in the region where the protozoan can develop, and minimize the influence on a cephalopod larva being bred in the rearing tank 2.

In addition, the predetermined time, which is the time for forming the high-concentration region S, may be 15 minutes or more, 20 minutes or more, 25 minutes or more, 30 minutes or more, 33 minutes or more, or 35 minutes or more. Furthermore, as long as the high-concentration region S is maintained, there is no problem; however, the predetermined time may be, for example, 180 minutes or less, 150 minutes or less, 120 minutes or less, 100 minutes or less, 80 minutes or less, 60 minutes or less, 50 minutes or less, 40 minutes or less, or 30 minutes or less. With the predetermined time set in such a range, the method can appropriately exterminate a protozoan in the high-concentration region S. As an example, the predetermined time may be 15 minutes or more and 60 minutes or less.

Forming the high-concentration region S may comprise supplying a high-concentration salt water and/or a solid salt to the bottom part of the rearing tank. Using the solid salt, for example, in granular form or powder form increases the surface area and thus facilitates the dissolution of the solid salt and the adjustment of the salt concentration. The high-concentration salt water and/or the solid salt may comprise at least one salt selected from the group consisting of sodium chloride, potassium chloride, magnesium chloride, magnesium sulfate, calcium sulfate, and calcium chloride. A substance of these is supplied to the bottom part of the rearing tank 2, and this can appropriately form the high-concentration region S at the bottom part.

In addition, in forming the high-concentration region S, the high-concentration salt water and/or the solid salt may be supplied to the bottom part to avoid mixing with water in an upper part of the rearing tank 2. In this case, the method can reduce the change in the salt concentration of the floating region A of a cephalopod larva, which can be present in the upper part, and thus can further reduce the influence on the cephalopod larva.

In forming the high-concentration region S, the high-concentration salt water may be supplied using a supply means connecting the outside of the rearing tank 2 and the bottom part of the rearing tank 2. In addition, the supply means may be a piping like the salt feed part 4.

Furthermore, in removing the high-concentration region S, water present in the high-concentration region S may be removed using a removal means connecting the outside of the rearing tank 2 and the bottom part of the rearing tank 2. Moreover, the removal means may be a piping.

Furthermore, a member functioning as a supply means like the salt feed part 4 may be used as a removal means for removing water present in the high-concentration region S. In this case, the forming and removing of the high-concentration region S can be achieved by only one means, and thus this can avoid complication of the apparatus configuration.

It can also be said that the extermination method of protozoa with the cephalopod breeding apparatus 1 described above is an apparatus and a method capable of controlling the density of protozoa present in the rearing tank 2 by utilizing the forming and removing of the high-concentration region S. That is, the extermination method of protozoa according to the present embodiment may control the protozoan density in water in the rearing tank 2 to be 300 individuals/mL or less, 315 individuals/mL or less, 350 individuals/mL or less, 400 individuals/mL or less, 450 individuals/mL or less, or 500 individuals/mL or less in the floating rearing period. The apparatus and method can exterminate particularly a protozoan that may remain at the water bottom by forming the high-concentration region S with a high salt concentration and removing this after a predetermined period has elapsed as described above and thus can adjust the protozoan density in water to be low. Thus, the apparatus and method can prevent the protozoan development and proliferation by controlling the protozoan density to be the above range as described above.

In addition, the forming and removing of the high-concentration region S can impart protozoan resistance in a cephalopod larva. The forming and removing of the high-concentration region S can impart a physiological and/or gene expression-related molecular biological change to the body of a cephalopod larva in the floating rearing period. The forming and removing of the high-concentration region S during the floating rearing period of a cephalopod larva can bring about an effect of inhibiting the activity of a protozoan that affects the mortality of a cephalopod larva. The protozoan resistance acquired by the forming and removing of the high-concentration region S can continue for at least 5 days or more, 10 days or more, or 15 days or more.

### Example 1

Larvae of the common octopus, a species of cephalopod, were bred for 12 days using a cephalopod breeding apparatus similar to the cephalopod breeding apparatus 1 shaped as illustrated in FIG. 1. A rearing tank with a volume of 500 L was used. A difference from the cephalopod breeding apparatus 1 is that the water injection part 31 and the water discharge part 32 are installed at the bottom part of the rearing tank 2. About 3000 individuals of common octopus larvae on day 0 after the start of breeding were placed in the rearing tank 2 and then bred for 12 days using such a cephalopod breeding apparatus.

At that time, the high-concentration region S was formed and removed five times according to the days of age of the common octopus larvae. Specifically, the high-concentration region S were formed and removed on day 0, day 3, day 6, and day 9 after the start of breeding. A 26% sodium chloride aqueous solution was added to form the high-concentration region S. The high-concentration region S was formed from the water depth of the rearing tank 2 to approximately 3 cm and was removed after maintained for 15 minutes. The operations of the forming and removing of the high-concentration region S were performed in the same manner every time.

The water exchange part 3 was controlled to control the water exchange rate in the rearing tank 2 to be 77%/day from day 0 to day 6 after the start of breeding, and 100%/day on and after day 7. During the time period in which the high-concentration region S was formed in the rearing tank 2, the water exchange was stopped.

Under the above conditions, the protozoan density and the daily mortality at each day of age from day 7 to day 12 were measured and averaged. These results are shown in Table 1. In addition, a protozoan that developed here was examined by 18SrRNAgene sequence analysis, and it was identified as *Metanophrys sinensis.*

In addition, as Comparative Example 1, common octopus larvae were also bred under conditions where the high-concentration region S were not formed or removed, and the protozoan density and the daily mortality at each day of age from day 7 to day 12 were measured and the averaged. These results are shown in Table 1.

**[Table 1]**

| | Protozoan density (individuals/mL) | Daily mortality (%) |
|---|---|---|
| Example 1 | 19.2 | 1.8 |
| Comparative Example 1 | 238.3 | 7.4 |

The results shown in Table 1 confirmed that the protozoan density tended to be lower in Example 1 than in Comparative Example 1. In addition, the daily mortality was lower in Example 1 than in Comparative Example 1. These results were able to confirm that the method can reduce the protozoan density and reduce the mortality of common octopus larvae by forming the high-concentration region S with a high salt concentration.

### Example 2

The common octopus larvae bred for 12 days while the high-concentration region S was formed and removed in Example 1 were further bred for 5 days. About 2000 individuals among them were exposed to an environment where the protozoan density was 350 (individuals/mL), and the daily mortality was measured. As Comparative Example 2, common octopus larvae bred for 12 days under conditions were the high-concentration region S were not formed or removed were further bred for 3 days. About 1500 individuals among them were exposed to an environment where the protozoan density was 150 (individuals/mL), and the daily mortality was measured. The results are shown in Table 2.

**[Table 2]**

| | Daily mortality (%) |
|---|---|
| Example 2 | 0.43 |
| Comparative Example 2 | 8.09 |

According to Table 2, the daily mortality was lower in Example 2 than in Comparative Example 2 even though the larvae were exposed to the high protozoan density. This was able to confirm that the method can reduce the daily mortality by breeding the common octopus larvae by forming the high-concentration region S with a high salt concentration even though the protozoan density is increased. In Example 2, the daily mortality was 8.00% or less even though the protozoan density in water in the rearing tank was 150 individuals/mL or more.

### Modified Example

Although embodiments of the present disclosure have been described above, the rearing method of cephalopods, the prevention method of protozoa, and the extermination method of protozoa according to the present disclosure are not limited to the above embodiments.

For example, although the case where the cephalopod is a common octopus has been described in the above embodiments, in the case of breeding a larva of another cephalopod, the breeding conditions may be appropriately changed as necessary. In one example among various examples described in the present disclosure, at least a part of matters described in other examples may be applied.

### Reference Signs List

1 Cephalopod breeding apparatus,
2 Rearing tank,
3 Water exchange part,
4 Salt feed part,
31 Water injection part,
32 Water discharge part,
33 Aeration equipment,
21 Bottom wall,
41 Feed inlet, and
42 Outlet.

## Claims

1. A rearing method of cephalopods for breeding a cephalopod larva in a rearing tank, the method comprising:
in a floating rearing period of the cephalopod larva,
forming a high-concentration region at a bottom part of the rearing tank, the high-concentration region having a salt concentration higher than that of seawater; and
removing the high-concentration region after a predetermined time has elapsed from the forming of the high-concentration region.

2. The rearing method of cephalopods according to claim 1, wherein the forming of the high-concentration region and the removing of the high-concentration region are performed in at least a part of a period until the cephalopod larva is 15 days old.

3. The rearing method of cephalopods according to claim 1 or 2, wherein the bottom part of the rearing tank is within 5 cm from the deepest part of the rearing tank.

4. The rearing method of cephalopods according to any one of claims 1 to 3, wherein a salt concentration in the high-concentration region is 40‰ or greater.

5. The rearing method of cephalopods according to any one of claims 1 to 4, wherein the forming of the high-concentration region comprises supplying a high-concentration salt water and/or a solid salt to the bottom part of the rearing tank.

6. The rearing method of cephalopods according to claim 5, wherein the high-concentration salt water and/or the solid salt comprises at least one salt selected from the group consisting of sodium chloride, potassium chloride, magnesium chloride, magnesium sulfate, calcium sulfate, and calcium chloride.

7. The rearing method of cephalopods according to claim 5 or 6, wherein in the forming of the high-concentration region, the high-concentration salt water and/or the solid salt is supplied to the bottom part to avoid mixing with water in an upper part of the rearing tank.

8. The rearing method of cephalopods according to claim 7, wherein in the forming of the high-concentration region, the high-concentration salt water is supplied using a supply means connecting an outside of the rearing tank and the bottom part of the rearing tank.

9. The rearing method of cephalopods according to claim 8, wherein the supply means is a piping.

10. The rearing method of cephalopods according to claim 8 or 9, wherein in the removing of the high-concentration region, the supply means is used as a removal means for removing water present in the high-concentration region.

11. The rearing method of cephalopods according to any one of claims 1 to 10, wherein the predetermined time is 15 minutes or more and 60 minutes or less.

12. The rearing method of cephalopods according to any one of claims 1 to 11, wherein in the removing of the high-concentration region, water present in the high-concentration region is removed using a removal means connecting the outside of the rearing tank and the bottom part of the rearing tank.

13. The rearing method of cephalopods according to claim 12, wherein the removal means is a piping.

14. The rearing method of cephalopods according to any one of claims 1 to 13, wherein the forming of the high-concentration region and the removing of the high-concentration region are performed a plurality of times in the rearing period.

15. The rearing method of cephalopods according to any one of claims 1 to 14, wherein in the floating rearing period of the cephalopod larva, a protozoan density in water in the rearing tank is controlled to be 350 individuals/mL or less.

16. The rearing method of cephalopods according to claim 15, wherein a protozoan to be measured for the protozoan density is a flagellate or a ciliate.

17. A rearing method of cephalopods for breeding a cephalopod larva in a rearing tank, wherein in the floating rearing period of the cephalopod larva, a protozoan density in water in the rearing tank is controlled to be 350 individuals/mL or less.

18. The rearing method of cephalopods according to claim 17, wherein a protozoan to be measured for the protozoan density is a flagellate or a ciliate.

19. A prevention method of protozoa for preventing a protozoan from developing in a rearing tank in breeding a cephalopod larva in the rearing tank, the method comprising:
in a floating rearing period of the cephalopod larva,
forming a high-concentration region at a bottom part of the rearing tank, the high-concentration region having a salt concentration higher than that of seawater; and
removing the high-concentration region after a predetermined time has elapsed from the forming of the high-concentration region.

20. The prevention method of protozoa according to claim 19, wherein the forming of the high-concentration region and the removing of the high-concentration region are performed in at least a part of a period until the cephalopod larva is 15 days old.

21. The prevention methods of protozoa according to claim 19 or 20, wherein the bottom part of the rearing tank is within 5 cm from the deepest part of the rearing tank.

22. The prevention method of protozoa according to any one of claims 19 to 21, wherein a salt concentration in the high-concentration region is 40‰ or greater.

23. The prevention method of protozoa according to any one of claims 19 to 22, wherein the forming of the high-concentration region comprises supplying a high-concentration salt water and/or a solid salt to the bottom part of the rearing tank.

24. The prevention method of protozoa according to claim 23, wherein the high-concentration salt water and/or the solid salt comprises at least one salt selected from the group consisting of sodium chloride, potassium chloride, magnesium chloride, magnesium sulfate, calcium sulfate, and calcium chloride.

25. The prevention method of protozoa according to claim 23 or 24, wherein in the forming of the high-concentration region, the high-concentration salt water and/or the solid salt is supplied to the bottom part to avoid mixing with water in an upper part of the rearing tank.

26. The prevention method of protozoa according to claim 25, wherein in the forming of the high-concentration region, the high-concentration salt water is supplied using a supply means connecting an outside of the rearing tank and the bottom part of the rearing tank.

27. The prevention method of protozoa according to claim 26, wherein the supply means is a piping.

28. The prevention method of protozoa according to claim 26 or 27, wherein in the removing of the high-concentration region, the supply means is used as a removal means for removing water present in the high-concentration region.

29. The prevention method of protozoa according to any one of claims 19 to 28, wherein the predetermined time is 15 minutes or more and 60 minutes or less.

30. The prevention method of protozoa according to any one of claims 19 to 29, wherein in the removing of the high-concentration region, water present in the high-concentration region is removed using a removal means connecting the outside of the rearing tank and the bottom part of the rearing tank.

31. The prevention method of protozoa according to claim 30, wherein the removal means is a piping.

32. The prevention method of protozoa according to any one of claims 19 to 31, wherein the forming of the high-concentration region and the removing of the high-concentration region are performed a plurality of times in the rearing period.

33. The prevention method of protozoa according to any one of claims 19 to 32, wherein the protozoan is a flagellate or a ciliate.

34. The prevention method of protozoa according to any one of claims 19 to 33, wherein in the floating rearing period, a protozoan density in water in the rearing tank is controlled to be 350 individuals/mL or less.

35. A extermination method of protozoa for exterminating a protozoan from an inside of a rearing tank in breeding a cephalopod larva in the rearing tank, the method comprising:
in a floating rearing period of the cephalopod larva,
forming a high-concentration region at a bottom part of the rearing tank, the high-concentration region having a salt concentration higher than that of seawater; and
removing the high-concentration region after a predetermined time has elapsed from the forming of the high-concentration region.

36. The extermination method of protozoa according to claim 35, wherein the forming of the high-concentration region and the removing of the high-concentration region are performed in at least a part of a period until the cephalopod larva is 15 days old.

37. The extermination method of protozoa according to claim 35 or 36, wherein the bottom part of the rearing tank is within 5 cm from the deepest part of the rearing tank.

38. The extermination method of protozoa according to any one of claims 35 to 37, wherein a salt concentration in the high-concentration region is 40‰ or greater.

39. The extermination method of protozoa according to any one of claims 35 to 38, wherein the forming of the high-concentration region comprises supplying a high-concentration salt water and/or a solid salt to the bottom part of the rearing tank.

40. The extermination method of protozoa according to claim 39, wherein the high-concentration salt water and/or the solid salt comprises at least one salt selected from the group consisting of sodium chloride, potassium chloride, magnesium chloride, magnesium sulfate, calcium sulfate, and calcium chloride.

41. The extermination method of protozoa according to claim 39 or 40, wherein in the forming of the high-concentration region, the high-concentration salt water and/or the solid salt is supplied to the bottom part to avoid mixing with water in an upper part of the rearing tank.

42. The extermination method of protozoa according to claim 41, wherein in the forming of the high-concentration region, the high-concentration salt water is supplied using a supply means connecting an outside of the rearing tank and the bottom part of the rearing tank.

43. The extermination method of protozoa according to claim 42, wherein the supply means is a piping.

44. The extermination method of protozoa according to claim 42 or 43, wherein in the removing of the high-concentration region, the supply means is used as a removal means for removing water present in the high-concentration region.

45. The extermination method of protozoa according to any one of claims 35 to 44, wherein the predetermined time is 15 minutes or more and 60 minutes or less.

46. The extermination method of protozoa according to any one of claims 35 to 45, wherein in the removing of the high-concentration region, water present in the high-concentration region is removed using a removal means connecting the outside of the rearing tank and the bottom part of the rearing tank.

47. The extermination method of protozoa according to claim 46, wherein the removal means is a piping.

48. The extermination method of protozoa according to any one of claims 35 to 47, wherein the forming of the high-concentration region and the removing of the high-concentration region are performed a plurality of times in the rearing period.

49. The extermination method of protozoa according to any one of claims 35 to 48, wherein the protozoan is a flagellate or a ciliate.

50. The extermination method of protozoa according to any one of claims 35 to 49, wherein in the floating rearing period, a protozoan density in water in the rearing tank is controlled to be 350 individuals/mL or less.

51. A cephalopod larva bred in a rearing tank by a breeding method comprising:
in a floating rearing period of the cephalopod larva:
forming a high-concentration region at a bottom part of the rearing tank, the high-concentration region having a salt concentration higher than that of seawater; and
removing the high-concentration region after a predetermined time has elapsed from the forming of the high-concentration region.

52. The cephalopod larva according to claim 51, wherein the forming of the high-concentration region and the removing of the high-concentration region are performed in at least a part of a period until the cephalopod larva is 15 days old.

53. The cephalopod larva according to claim 51 or 52, wherein the bottom part of the rearing tank is within 5 cm from the deepest part of the rearing tank.

54. The cephalopod larva according to any one of claims 51 to 53, wherein a salt concentration in the high-concentration region is 40‰ or greater.

55. The cephalopod larva according to any one of claims 51 to 54, wherein the forming of the high-concentration region comprises supplying a high-concentration salt water and/or a solid salt to the bottom part of the rearing tank.

56. The cephalopod larva according to claim 55, wherein the high-concentration salt water and/or the solid salt comprises at least one salt selected from the group consisting of sodium chloride, potassium chloride, magnesium chloride, magnesium sulfate, calcium sulfate, and calcium chloride.

57. The cephalopod larva according to claim 55 or 56, wherein in the forming of the high-concentration region, the high-concentration salt water and/or the solid salt is supplied to the bottom part to avoid mixing with water in an upper part of the rearing tank.

58. The cephalopod larva according to claim 57, wherein in the forming of the high-concentration region, the high-concentration salt water is supplied using a supply means connecting an outside of the rearing tank and the bottom part of the rearing tank.

59. The cephalopod larva according to claim 58, wherein the supply means is a piping.

60. The cephalopod larva according to claim 58 or 59, wherein in the removing of the high-concentration region, the supply means is used as a removal means for removing water present in the high-concentration region.

61. The cephalopod larva according to any one of claims 51 to 60, wherein the predetermined time is 15 minutes or more and 60 minutes or less.

62. The cephalopod larva according to any one of claims 51 to 61, wherein in removing the high-concentration region, water present in the high-concentration region is removed using a removal means connecting the outside of the rearing tank and the bottom part of the rearing tank.

63. The cephalopod larva according to claim 62, wherein the removal means is a piping.

64. The cephalopod larva according to any one of claims 51 to 63, wherein the forming of the high-concentration region and the removing of the high-concentration region are performed a plurality of times in the rearing period.

65. A cephalopod larva resistant to a protozoan.

66. The cephalopod larva according to claim 65, wherein the protozoan is a flagellate or a ciliate.

67. The cephalopod larva according to claim 65 or 66,
wherein
the cephalopod larva is bred in a rearing tank by a breeding method comprising:
in a floating rearing period of the cephalopod larva,
forming a high-concentration region at a bottom part of the rearing tank, the high-concentration region having a salt concentration higher than that of seawater; and
removing the high-concentration region after a predetermined time has elapsed from the forming of the high-concentration region,
in the floating rearing period of the cephalopod larva, daily mortality is 8.00 or less even if a protozoan density in water in the rearing tank is 150 individuals/mL or more.

68. The cephalopod larva according to claim 67, wherein the high-concentration region is formed once or a plurality of times.
